# EUROPEAN PATENT APPLICATION

(11) **EP 3 748 158 A1**
(43) Date of publication of application: **09.12.2020**
(21) Application number: 19743820.3
(22) Date of filing: 08.01.2019
(51) Int. Cl.: F04B 27/18, F16K 31/06

(54) **CONTROL VALVE FOR VARIABLE DISPLACEMENT COMPRESSOR**

(30) Priority: 29.01.2018 JP 2018012349
(71) Applicant: Fujikoki Corporation, Tokyo 158-0082 (JP)
(72) Inventor: TANO, Shintaro, Tokyo 158-0082 (JP); KUME, Yoshiyuki, Tokyo 158-0082 (JP); ASANO, Hisashi, Tokyo 158-0082 (JP); ITOH, Masaharu, Tokyo 158-0082 (JP)
(74) Representative: Ter Meer Steinmeister & Partner
(86) International application number: PCT/JP2019/000121
(87) International publication number: WO 2019/146389

(57) **Abstract**

Provided is a variable-capacity compressor control valve that can avoid accumulation of foreign matter in a sliding-surface gap formed between a main valve element and a guide hole and can reduce operation failures such that the valve may become locked or the main valve element may become left. The lower end of a sliding-surface portion 10f of a main valve element 10 (or an intermediate fit-inserted portion 10c thereof), which goes into an inner side of a sliding-surface portion 19f of a guide hole 19 when a valve orifice 22 is closed, is adapted to protrude toward the valve orifice 22 from the sliding-surface portion 19f of the guide hole 19 when the valve orifice 22 is open.

## Description

### Technical Field

The present invention relates a variable-capacity compressor control valve for use in an automotive air conditioner, for example. In particular, the present invention relates to a variable-capacity compressor control valve in which operation failures of a valve element due to foreign matter, which intrudes into a sliding-surface gap formed between the valve element and a guide hole, are unlikely to occur.

### Background Art

Usually, a control valve for a variable-capacity compressor used for an automotive air conditioner, for example, is adapted to receive a discharge pressure Pd from a discharge chamber of the compressor and control a pressure Pc in a crank chamber by controlling the discharge pressure Pd in accordance with a suction pressure Ps of the compressor. Typically, such a control valve has, as seen in Patent Literature 1 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a main valve element (i.e., a valve stem) for opening or closing the valve orifice; an electromagnetic actuator with a plunger for moving the main valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the main valve element in the direction to open or close the valve orifice in accordance with the pressure in the pressure-sensitive chamber.

A variable-capacity compressor control valve described in Patent Literature 2 below includes, in addition to the aforementioned configuration, an in-valve release passage for releasing the pressure Pc in the crank chamber to the suction chamber of the compressor via the Ps inlet/outlet port, and a sub valve element for opening or closing the in-valve release passage. When the plunger is continuously moved upward from the lowest position due to the attraction force of the electromagnetic actuator, the sub valve element moves upward together with the plunger while closing the in-valve release passage, and the main valve element is also moved upward so as to follow the sub valve element. Then, after the valve orifice is closed by the main valve element, if the plunger is further moved upward, the sub valve element is caused to open the in-valve release passage.

### Citation List

### Patent Literature

Patent Literature 1: JP 5553514 B
Patent Literature 2: JP 2013-130126 A

### Summary of Invention

### Technical Problem

By the way, in the conventional variable-capacity compressor control valves described in Patent Literature 1 and 2 above, for example, the main valve element for opening or closing the valve orifice is slidably fitted and inserted through a guide hole provided in the valve body. Thus, there is a possibility that a sliding-surface gap (i.e., clearance) formed between the main valve element (or the outer peripheral face thereof) and the guide hole (or the inner wall face thereof) may become clogged with foreign matter (such as scraps generated from cutting or polishing and an abrasive material that remain from the time of the machining and assembly process, particles resulting from sliding friction, and dust from the outside), which may result in operation failures of the main valve element such that the main valve element becomes difficult to move (e.g., the valve may become locked or the valve element may become left).

Specifically, in the conventional variable-capacity compressor control valves described in Patent Literature 1 and 2 above, for example, when the valve orifice is closed, foreign matter intrudes into the sliding-surface gap due to a pressure difference between the Ps inlet/outlet port and the Pd introduction port, and the sliding-surface gap may have the foreign matter accumulated therein and thus become clogged with the foreign matter because, when the valve orifice is open, a sliding portion (i.e., a sliding-surface portion) of the main valve element operates only within a sliding portion (i.e., a sliding-surface portion) of the guide hole.

The present invention has been made in view of the foregoing, and it is an object of the present invention to provide a variable-capacity compressor control valve that can avoid accumulation of foreign matter in a sliding-surface gap formed between a main valve element and a guide hole and thus can reduce operation failures such that the valve may become locked or the main valve element may become left.

### Solution to Problem

To achieve the aforementioned objects, a variable-capacity compressor control valve according to the present invention basically includes: a main valve element including a main valve element portion; a valve body including a guide hole through which the main valve element is slidably fitted and inserted, a valve chamber with a valve orifice, the valve orifice being formed at an end of the guide hole and being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the main valve element includes a main valve element side sliding-surface portion adapted to go into an inner side of a guide hole side sliding-surface portion of the guide hole when the valve orifice is closed, and the main valve element side sliding-surface portion of the main valve element is adapted to partially protrude toward the valve orifice from the guide hole side sliding-surface portion of the guide hole when the valve orifice is open.

In a preferable aspect, the guide hole side sliding-surface portion has a widened portion provided at an end closer to the valve orifice, the widened portion being wider than the guide hole side sliding-surface portion; and the main valve element side sliding-surface portion of the main valve element is adapted to partially protrude to a position inside of the widened portion or to a position closer to the valve orifice with respect to the widened portion when the valve orifice is open.

In another preferable aspect, the guide hole side sliding-surface portion has a recess groove provided at an end closer to the valve orifice; and the main valve element side sliding-surface portion of the main valve element is adapted to partially protrude to a position inside of the recess groove or to a position closer to the valve orifice with respect to the recess groove when the valve orifice is open.

In further another preferable aspect, an annular groove is provided on an outer periphery of the main valve element; and a portion including at least the annular groove of the main valve element is adapted to protrude from the guide hole side sliding-surface portion of the guide hole toward the valve orifice when the valve orifice is open.

In still another preferable aspect, a lower small-diameter portion is provided immediately below the main valve element side sliding-surface portion of the main valve element, with a step portion interposed therebetween.

In yet another preferable aspect, when the valve orifice is open, the main valve element side sliding-surface portion of the main valve element is not adapted to partially protrude to a position corresponding to the Pd introduction port communicating with the guide hole between the guide hole side sliding-surface portion and the valve orifice, as seen in a direction perpendicular to a direction to open or close the valve orifice.

In yet another preferable aspect, when the valve orifice is open, the main valve element side sliding-surface portion of the main valve element is adapted to partially protrude to a position corresponding to the Pd introduction port communicating with the guide hole between the guide hole side sliding-surface portion and the valve orifice, as seen in a direction perpendicular to a direction to open or close the valve orifice.

In yet another preferable aspect, the guide hole side sliding-surface portion of the guide hole is provided between the Ps inlet/outlet port and one of the Pd introduction port or the Pc inlet/outlet port within the valve body.

In yet another preferable aspect, the variable-capacity compressor control valve further includes an in-valve release passage provided in the valve body or the main valve element, the in-valve release passage being adapted to release a pressure Pc in the crank chamber to the suction chamber of the compressor via the Ps inlet/outlet port; and a sub valve element adapted to open or close the in-valve release passage.

### Advantageous Effects of Invention

According to the present invention, when the valve orifice is open, the main valve element side sliding-surface portion of the main valve element partially protrudes toward the valve orifice from the guide hole side sliding-surface portion of the guide hole, whereby foreign matter intruded into the sliding-surface gap (i.e., clearance) formed between the main valve element and the guide hole when the valve orifice is closed can be easily discharged from the sliding-surface gap (i.e., clearance) through the valve orifice and the valve chamber to the Pc inlet/outlet port, by means of the main valve element that protrudes from the guide hole side sliding-surface portion toward the valve orifice when the valve orifice is open, thus avoiding accumulation of the foreign matter in the sliding-surface gap. Therefore, it is possible to reduce operation failures such that the valve may become locked or the main valve element may become left.

### Brief Description of Drawings

Fig. 1 is a longitudinal sectional view of a first embodiment of the variable-capacity compressor control valve according to the present invention in which a main valve element is in the open position and a sub valve element is in the closed position (i.e., during the normal control time).
Fig. 2 is a longitudinal sectional view of the first embodiment of the variable-capacity compressor control valve according to the present invention in which the main valve element is in the closed position and the sub valve element is in the closed position (i.e., during the time of transition to compressor actuation (1)).
Fig. 3 is a longitudinal sectional view of the first embodiment of the variable-capacity compressor control valve according to the present invention in which the main valve element is in the closed position and the sub valve element is in the closed position (i.e., during the time of transition to compressor actuation (2)).
Fig. 4 is a longitudinal sectional view of the first embodiment of the variable-capacity compressor control valve according to the present invention in which the main valve element is in the closed position and the sub valve element is in the open position (i.e., during the compressor actuation time).
Fig. 5 is an enlarged view of a portion A of Fig. 1.
Fig. 6 is an enlarged view of a portion B of Fig. 2.
Fig. 7 is a cross-sectional view taken in the direction of the arrow U-U in Fig. 1.
Fig. 8A is a perspective view of the sub valve element used in the first embodiment of the variable-capacity compressor control valve according to the present invention.
Fig. 8B is a front view of the sub valve element used in the first embodiment of the variable-capacity compressor control valve according to the present invention.
Fig. 8C is a left side view of the sub valve element used in the first embodiment of the variable-capacity compressor control valve according to the present invention.
Fig. 8D is a top view of the sub valve element used in the first embodiment of the variable-capacity compressor control valve according to the present invention.
Fig. 8E is a bottom view of the sub valve element used in the first embodiment of the variable-capacity compressor control valve according to the present invention.
Fig. 8F is a cross-sectional view of the sub valve element used in the first embodiment of the variable-capacity compressor control valve according to the present invention, taken in the direction of the arrow V-V in Fig. 8C.
Fig. 9 is an enlarged longitudinal sectional view of a main part of another example of the first embodiment of the variable-capacity compressor control valve according to the present invention.
Fig. 10 is an enlarged longitudinal sectional view of a main part of further another example of the first embodiment of the variable-capacity compressor control valve according to the present invention.
Fig. 11 is an enlarged longitudinal sectional view of a main part of still another example of the first embodiment of the variable-capacity compressor control valve according to the present invention.
Fig. 12 is a longitudinal sectional view of a second embodiment of the variable-capacity compressor control valve according to the present invention in which the main valve element is in the open position and the sub valve element is in the closed position (i.e., during the normal control time).
Fig. 13 is a longitudinal sectional view of the second embodiment of the variable-capacity compressor control valve according to the present invention in which the main valve element is in the closed position and the sub valve element is in the closed position (i.e., during the time of transition to compressor actuation).
Fig. 14 is a longitudinal sectional view of the second embodiment of the variable-capacity compressor control valve according to the present invention in which the main valve element is in the closed position and the sub valve element is in the open position (i.e., during the compressor actuation time).
Fig. 15 is an enlarged view of a portion C of Fig. 12.
Fig. 16 is an enlarged view of a portion D of Fig. 13.
Fig. 17 is a cross-sectional view taken in the direction of the arrow X-X in Fig. 12.

### Description of Embodiments

Hereinafter, embodiments of the present invention will be described with reference to the drawings.

### <First embodiment>

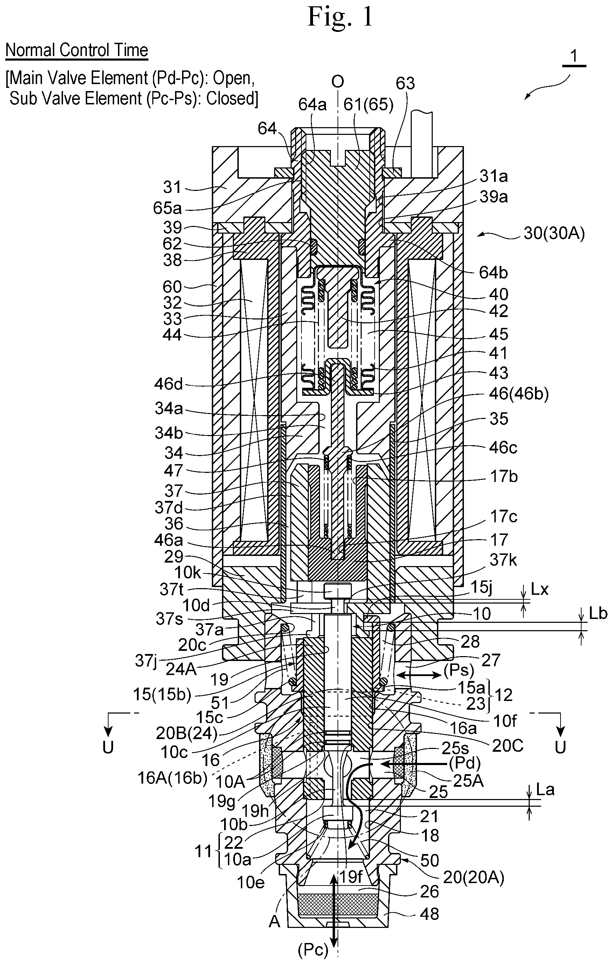

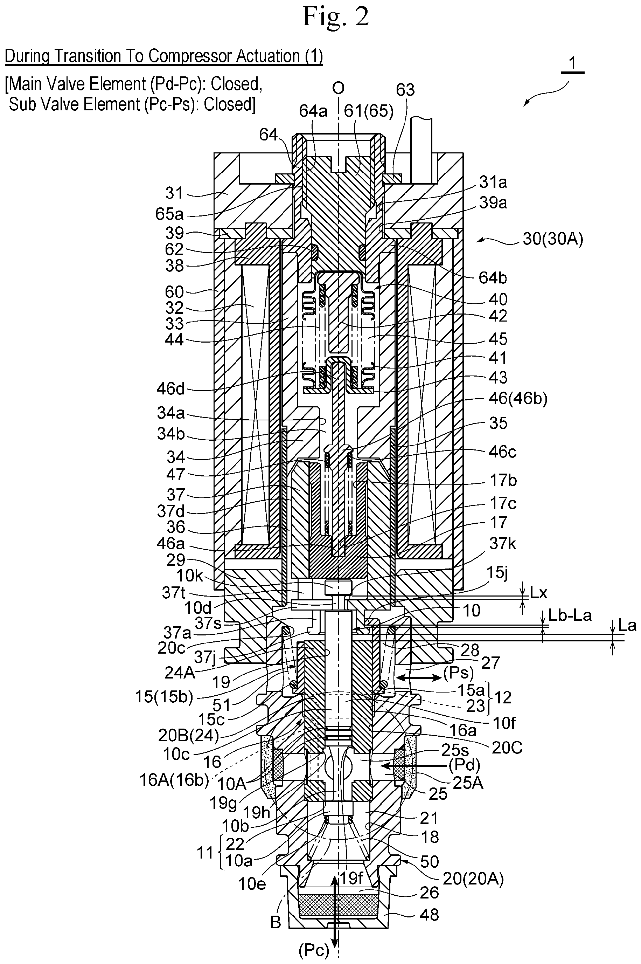

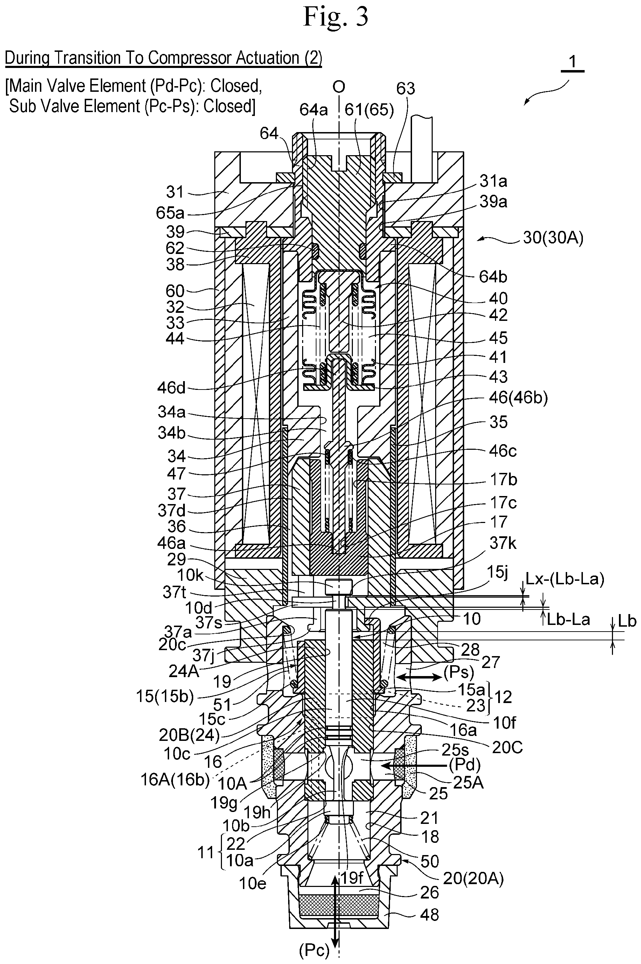

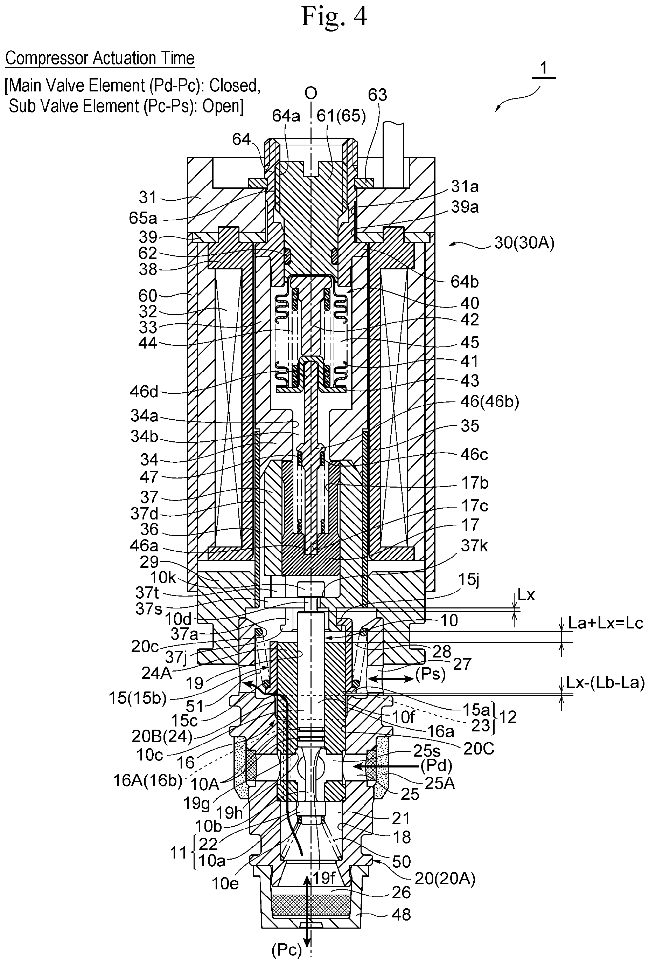

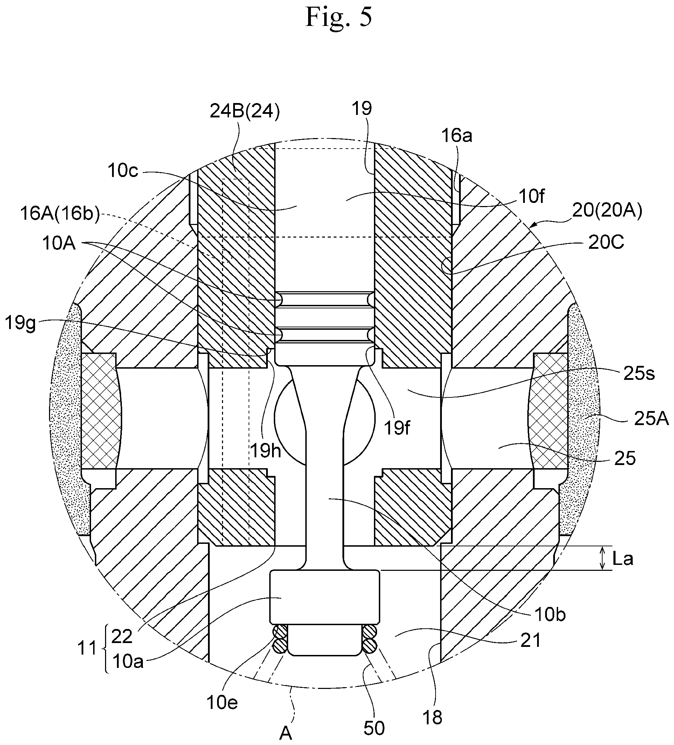

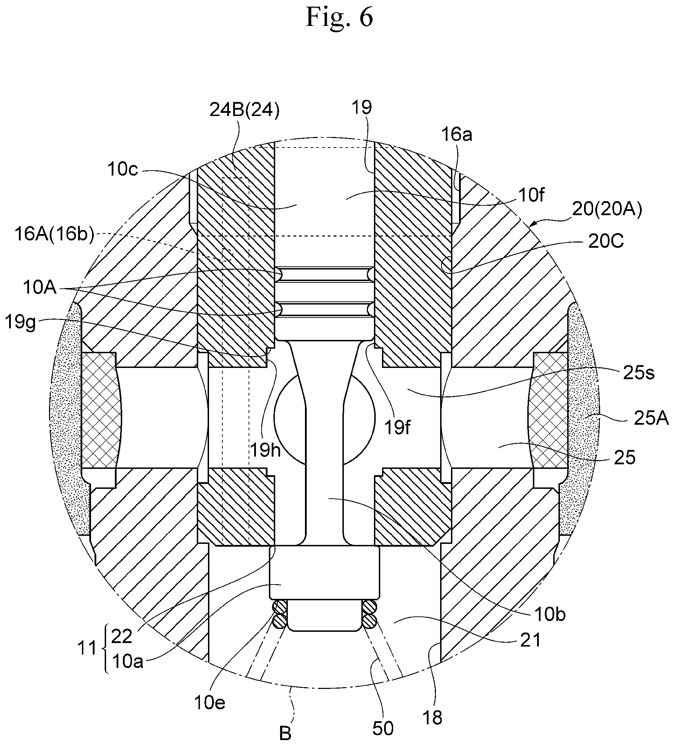

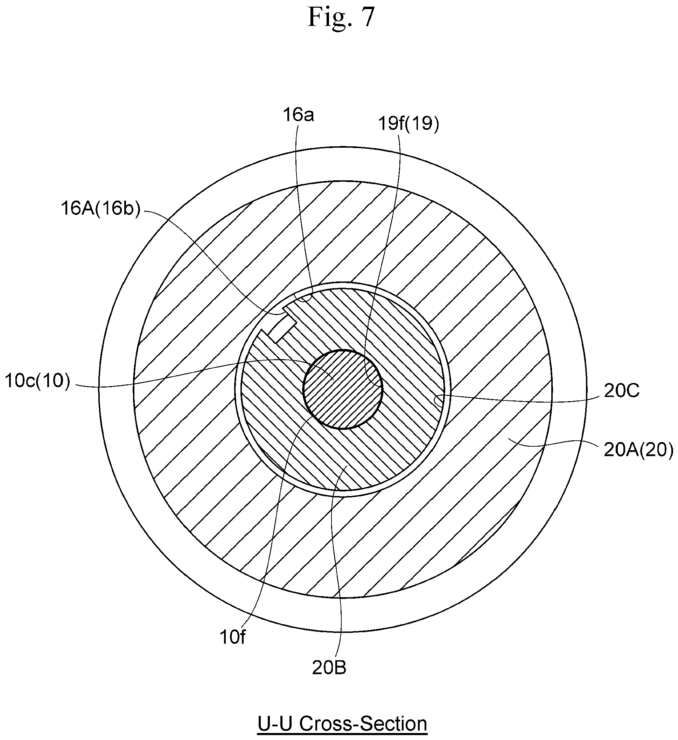

Fig. 1 to Fig. 4 are longitudinal sectional views of a first embodiment of the variable-capacity compressor control valve according to the present invention. Fig. 1 shows a state in which the main valve element is in the open position and the sub valve element is in the closed position (i.e., during the normal control time). Fig. 2 and Fig. 3 show a state in which the main valve element is in the closed position and the sub valve element is in the closed position (i.e., during the time of transition to compressor actuation). Fig. 4 shows a state in which the main valve element is in the closed position and the sub valve element is in the open position (i.e., during the compressor actuation time). Fig. 5 is an enlarged view of a portion A of Fig. 1, Fig. 6 is an enlarged view of a portion B of Fig. 2, and Fig. 7 is a cross-sectional view taken in the direction of the arrow U-U in Fig. 1.

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

### [Configuration of control valve 1]

A control valve 1 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 externally arranged around the coil 32, a connector portion 31 attached to the upper side of the housing 60 with interposed therebetween an attachment plate 39, and a holder 29 disposed between the lower end of the housing 60 and the lower end of the guide pipe 35 and adapted to fix them to the upper portion of the valve body 20 (or a body member 20A thereof). In this example, the cylindrical attractor 34 with an insertion through-hole 34a formed in the center (along the axis O) thereof, which has a smaller diameter than the inside diameter of the stator 33, is integrally molded with the inner periphery of the lower portion of the cylindrical stator 33. Herein, a portion of the electromagnetic actuator 30 including the coil 32, the stator 33, the attractor 34, and the like and excluding the plunger 37 is referred to as a "solenoid portion 30A."

The upper portion of the stator 33 is provided with an adjustment member 61 obtained by screwing an external thread portion 65a, which is formed on the outer periphery of an adjustment screw 65 with a hexagon socket, into an internal thread portion 64a formed on the inner periphery of a cylindrical holding member 64. In such an adjustment member 61, the lower half portion of the adjustment screw 65 is fitted into the lower half portion of the holding member 64 (with an O-ring 62 as a sealing member interposed therebetween), and the external thread portion 65a provided on the outer periphery of the upper portion of the adjustment screw 65 is screwed into the internal thread portion 64a provided on the inner periphery of the upper portion of the holding member 64. The adjustment member 61 is inserted through a fit-insertion hole 31a that penetrates through substantially the center of the connector portion 31 and through a central hole 39a that is provided in substantially the center of the attachment plate 39. Thus, a flange portion 64b, which is provided in a protruding manner on the outer periphery of the lower portion of the holding member 64, and a ring-shaped pressing member 63, which is fitted in the outer periphery of the upper portion (or a fitting groove formed therein) of the holding member 64, securely hold in a cooperative manner the adjustment member 61 on the connector portion 31 and the attachment plate 39 (vertically immovably), and the lower end of the adjustment member 61 (or the holding member 64 thereof) (i.e., a portion thereof below the flange portion 64b) is arranged (inserted) on the inner periphery side of the upper end of the stator 33.

A pressure-sensitive chamber 45, which is adapted to receive a suction pressure Ps in a compressor, is formed between the adjustment member 61 (i.e., the adjustment screw 65 and the holding member 64) and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. A portion around the center of the pushrod 46 has a large diameter (i.e., a large-diameter portion 46b). An upper end 46d of the pushrod 46 is fitted and inserted into the recess portion of the lower stopper 43 and thus is supported therein, while the upper portion and the large-diameter portion 46b of the pushrod 46 are inserted through the insertion through-hole 34a of the attractor 34 (with a small gap 34b therebetween). The lower portion of the pushrod 46 is inserted into a recess hole 17b of an interior member 17 with a recessed cross-section described below, and the lower end 46a thereof is fitted into a recessed fit-insertion hole 17c formed in the center of the bottom of the recess hole 17b.

The interior member 17 with the recessed cross-section, which has the vertically long recess hole 17b with an approximately equal diameter to that of the insertion through-hole 34a of the attractor 34, is securely inserted into the plunger 37 by press fitting, for example. The interior member 17 is fitted into the plunger 37 such that the upper end of the interior member 17 is aligned with the upper end of the plunger 37 (i.e., the upper end of the interior member 17 is positioned with respect to the inner periphery of the upper end of the plunger 37), while the lower end of the interior member 17 is spaced apart from the bottom of the plunger 37 (with a gap that allows a flanged latch portion 10k of the main valve element 10 to slightly move vertically, which will be described in detail later). The recessed fit-insertion hole 17c, which is adapted to have the lower end 46a of the pushrod 46 fitted and inserted therein, is formed in the center of the bottom of the recess hole 17b of the interior member 17.

A plunger spring (i.e., a valve-opening spring) 47, which is a cylindrical compression coil spring, is provided in a compressed state between a step portion (i.e., an annular terrace face facing downward) 46c formed on the upper portion of the large-diameter portion 46b of the pushrod 46 and the bottom of the recess hole 17b (i.e., a face thereof facing upward around the fit-insertion hole 17c) of the interior member 17 fitted in the plunger 37. With the plunger spring 47 (or the compression force thereof), the plunger 37 is urged downward (i.e., in the direction to open the valve) via the interior member 17, and the bellows device 40 is held within the pressure-sensitive chamber 45 via the pushrod 46.

The plunger 37 has formed at its bottom a slit 37s that extends linearly from the outer periphery thereof to the center (on the axis O) and also has a cutout 37t, which is wider than the slit 37s, on the side part of the plunger 37 at a position corresponding to the slit 37s. The height (in the vertical direction) of the cutout 37t is set slightly larger than the height of the flanged latch portion 10k of the main valve element 10, and the height (in the vertical direction) of the slit 37s (i.e., the thickness (or the height in the vertical direction) of the bottom of the plunger 37) is set slightly smaller than the height of an upper small-diameter portion 10d of the main valve element 10 so that the main valve element 10 is vertically movable with respect to the plunger 37 (this will be described in detail later). In addition, the width (in the circumferential direction) of the cutout 37t is set slightly larger than the outside diameter of the flanged latch portion 10k of the main valve element 10, and the width (in the horizontal direction) of the slit 37s is set slightly larger than the outside diameter of the upper small-diameter portion 10d of the main valve element 10 and smaller than the outside diameter of the flanged latch portion 10k of the main valve element 10, taking into consideration the assembly property and the like. The outer periphery portion of the slit 37s at the upper face of the bottom of the plunger 37 serves as an inner flanged latch portion 37k to which the flanged latch portion 10k of the main valve element 10 is adapted to be latched.

Further, a tubular leg portion 37a with an approximately C-shape as seen in plan view, which has a cutout portion at a position corresponding to the slit 37s (specifically, a cutout portion of the tubular leg portion 37a that is wider than the outside diameter of an intermediate fit-inserted portion 10c of the main valve element 10), is provided in a (downwardly) protruding manner on the lower face of the plunger 37. The tubular leg portion 37a is externally arranged around the intermediate fit-inserted portion 10c (or the upper end thereof) of the main valve element 10 (with a small gap therebetween), and an outer flanged latch portion 37j to which a flanged latch portion 15j of a sub valve element 15 described later is adapted to be latched is provided in an (outwardly) protruding manner at the lower end of the tubular leg portion 37a.

In this example, a D-cut surface 37d is formed in a predetermined position on the outer periphery of the plunger 37 (i.e., on the side where the cutout 37t and the slit 37s are formed in the example illustrated in the drawing), and a gap 36 is formed between the outer periphery of the plunger 37 (or the D-cut surface 37d thereof) and the guide pipe 35. Instead of the D-cut surface 37d of the plunger 37, one or more vertical grooves may be formed to form the gap 36 between the outer periphery of the plunger 37 and the guide pipe 35.

The main valve element 10 is made of metal, for example, and is formed of a solid member with a stepped shaft shape arranged along the axis O. The main valve element 10 includes, from the lower side, a main valve element portion 10a with a relatively large diameter, a lower small-diameter portion 10b, the intermediate fit-inserted portion 10c that is vertically long, the upper small-diameter portion 10d, and the flanged latch portion 10k. An annular groove 10A is provided in each of two vertical positions on the outer periphery of the lower portion of the intermediate fit-inserted portion 10c. In the annular groove 10A, oil (i.e., oil for lubricating the compressor or the like) contained in the refrigerant that flows through the control valve 1 accumulates, thus ensuring and improving the sliding properties and the fluid-tight state, for example.

As described above, the intermediate fit-inserted portion 10c (or its upper end protruding upward from the guide hole 19) of the main valve element 10 is inserted in the tubular leg portion 37a provided on the lower face of the plunger 37, the upper small-diameter portion 10d is loosely fitted in the slit 37s, and the flanged latch portion 10k is loosely fitted on the inner side of the plunger 37 below the interior member 17 (i.e., in a space between the bottom of the plunger 37 and the lower end of the interior member 17). The flanged latch portion 10k has a larger diameter than the width of the slit 37s so that when the plunger 37 is moved upward with respect to the main valve element 10, the inner flanged latch portion 37k made of the outer periphery portion of the slit 37s is latched to the flanged latch portion 10k, and thus, latching is achieved and slippage is prevented. In addition, the intermediate fit-inserted portion 10c also has a larger diameter than the width of the slit 37s so that the outer periphery portion of the slit 37s at the lower face of the plunger 37 is allowed to face and contact the step portion between the intermediate fit-inserted portion 10c and the upper small-diameter portion 10d of the main valve element 10.

Meanwhile, the valve body 20 has a two-component configuration including a stepped cylindrical body member 20A having a fit recess hole 20C in the center of the upper portion thereof and also having a housing hole 18, which is continuous with the recess hole 20C and has a slightly smaller diameter than that of the recess hole 20C, in the center of the lower portion thereof; and a cylindrical seat member 20B that is securely inserted into the recess hole 20C by press fitting, for example.

The seat member 20B is produced from stainless steel (SUS) or a high-hardness brass material (e.g., brass that is made to contain a small amount of lead so as to have high hardness), for example, and is provided with a stopper portion 24A for defining the lowest position of the plunger 37 in a protruding manner on the upper part of a fit-insertion portion 24 which is adapted to be fitted and inserted into the recess hole 20C (i.e., so as to protrude from the fit-insertion portion 24 toward a Ps inlet/outlet chamber 28). The lower end of the seat member 20B (or the fit-insertion portion 24 thereof) is made to abut a step portion (i.e., a terrace portion) between the recess hole 20C and the housing hole 18 of the body member 20A. Further, a guide hole 19, through which the intermediate fit-inserted portion 10c of the main valve element 10 is slidably fitted and inserted and into which the lower small-diameter portion 10b provided immediately below the intermediate fit-inserted portion 10c (with the step portion interposed therebetween) is inserted, is provided in the center of the seat member 20B in a manner penetrating therethrough in the vertical direction (i.e., along the axis O). The lower end of the guide hole 19 serves as the valve orifice 22 (i.e., a valve seat portion) that is opened or closed by the main valve element portion 10a provided at the lower end of the main valve element 10. Herein, the main valve element portion 10a and the valve orifice 22 form a main valve unit 11.

In addition, the seat member 20B (and a tubular portion 15b of the sub valve element 15, which will be described later) (or the outside diameter thereof) has a smaller diameter than that of the plunger 37.

The body member 20A is produced from a material, such as aluminum, brass, or resin, for example. In a state in which the seat member 20B (or the fit-insertion portion 24 thereof) is inserted into the recess hole 20C of the body member 20A, the Ps inlet/outlet chamber 28 for the suction pressure Ps in the compressor is formed on the outer periphery of the stopper portion 24A (i.e., within the body member 20A on the upper end side of the seat member 20B), and a plurality of (two in the illustrated drawing) Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap 36 formed between the outer periphery of the plunger 37 and the guide pipe 35 (i.e., the gap formed by the D-cut surface 37d in this example), a gap 34b formed between the outer periphery of the pushrod 46 and the attractor 34, and the like.

In addition, the housing hole 18, which has a larger diameter than those of the guide hole 19 and the main valve element portion 10a of the main valve element 10, for housing the main valve element portion 10a is provided continuously with the center of the bottom of the recess hole 20C of the body member 20A. A valve-closing spring 50, which is a conical compression coil spring, is provided in a compressed state between the corner of the outer periphery of the bottom of the housing hole 18 and a step portion (i.e., a terrace face) 10e provided on the outer periphery of the lower portion of the main valve element portion 10a of the main valve element 10. Thus, with the urging force of the valve-closing spring 50, the main valve element 10 (i.e., the step portion between the intermediate fit-inserted portion 10c and the upper small-diameter portion 10d thereof) is pressed against the plunger 37 (or the lower face thereof). Herein, the inside of the housing hole 18 (i.e., a portion of the seat member 20B below the valve orifice 22) is a valve chamber 21.

A plurality of Pd introduction ports 25 communicating with the discharge chamber of the compressor are provided in the recess hole 20C, and a ring-like filter member 25A is disposed around the outer periphery of the Pd introduction ports 25. In addition, a plurality of horizontal holes 25s communicating with the Pd introduction ports 25 and continuous with the guide hole 19 are provided in the fit-insertion portion 24 of the seat member 20B (in particular, at positions below a portion in which the intermediate fit-inserted portion 10c of the main valve element 10 is inserted (i.e., a sliding-surface portion 19f and a widened portion 19h, which will be described later)) that is inserted into the recess hole 20C. Each of the plurality of horizontal holes 25s is formed on the inner side (just to the right) of each of the Pd introduction ports 25 in this example.

In addition, the lower end of the body member 20A has a lid-like member 48, which functions as a filter, fixed thereto by engagement or press fitting, for example. A Pc inlet/outlet chamber (or inlet/outlet port) 26, which communicates with a crank chamber of the compressor, is provided above the lid-like member 48 and below the housing hole 18 (i.e., within the body member 20A on the lower end side of the seat member 20B). The Pc inlet/outlet chamber (or inlet/outlet port) 26 communicates with the Pd introduction ports 25 via the valve chamber 21 → the gap between the valve orifice 22 and the main valve element portion 10a → the gap between the lower portion of the guide hole 19 and the lower small-diameter portion 10b → the horizontal holes 25s of the fit-insertion portion 24.

Further, in this embodiment, an in-valve-body communication passage 16A, which allows the Pc inlet/outlet chamber 26 and the Ps inlet/outlet chamber 28 to communicate with each other, is provided between the body member 20A and the seat member 20B of the valve body 20.

Specifically, as clearly understood by referring to Fig. 5 to Fig. 7, a vertical groove 16b, which is open at its lower end to the valve chamber 21 (and the Pc inlet/outlet chamber 26), is formed on the outer periphery of the fit-insertion portion 24 of the seat member 20B within the valve body 20, and an annular recess portion 16a continuous with the vertical groove 16b is formed on the inner periphery of the upper portion of the body member 20A (that is, the upper end of the recess hole 20C). The vertical groove 16b (which extends vertically) and the annular (circumferential) recess portion 16a form the in-valve-body communication passage 16A that allows the Pc inlet/outlet chamber 26 and the Ps inlet/outlet chamber 28 to communicate with each other. The in-valve-body communication passage 16A partially forms the in-valve release passage 16, and the upper end of the in-valve-body communication passage 16A (or the upper end of the annular recess portion 16C) serves as a sub valve seat portion 23 with/from which the lower end (or the sub valve element portion) 15a of the sub valve element 15 is adapted to be moved into contact or away (this will be described in detail later).

Meanwhile, the sub valve element 15 for opening or closing the in-valve release passage 16 (or the in-valve-body communication passage 16A) is arranged such that it is vertically slidable on the outer periphery of the stopper portion 24A that protrudes toward the Ps inlet/outlet chamber 28 within the seat member 20B.

The sub valve element 15 is made of metal, for example, and includes a tubular portion 15b that is slidably disposed around the stopper portion 24A and has an approximately equal diameter to that (i.e., the outside diameter) of the stopper portion 24A. The lower end of the tubular portion 15b serves as the sub valve element portion 15a that is adapted to move into contact with or away from the sub valve seat portion 23, which is the upper end edge of the in-valve-body communication passage 16A, so as to open or close the in-valve release passage 16. Herein, the sub valve seat portion 23 and the sub valve element portion 15a form a sub valve unit 12.

In addition, a lower flanged spring holder portion 15c is provided in an (outwardly) protruding manner at the lower end of the tubular portion 15b, and an upper flanged spring holder portion 20c is provided in a protruding manner at the upper end (or on the inner periphery) of the valve body 20 (or the body member 20A thereof). A valve-closing spring 51, which is a compression coil spring with an inverted cone shape adapted to urge the sub valve element 15 downward (i.e., in the valve-closing direction to close the in-valve release passage 16 (or the in-valve-body communication passage 16A)), is provided in a compressed state between the lower spring holder portion 15c and the upper spring holder portion 20c.

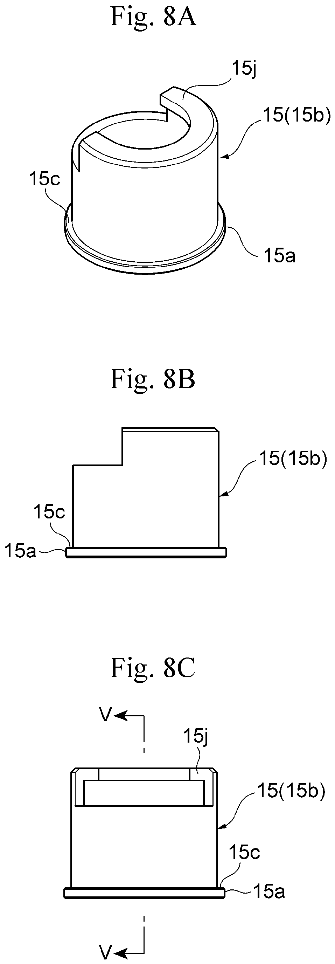

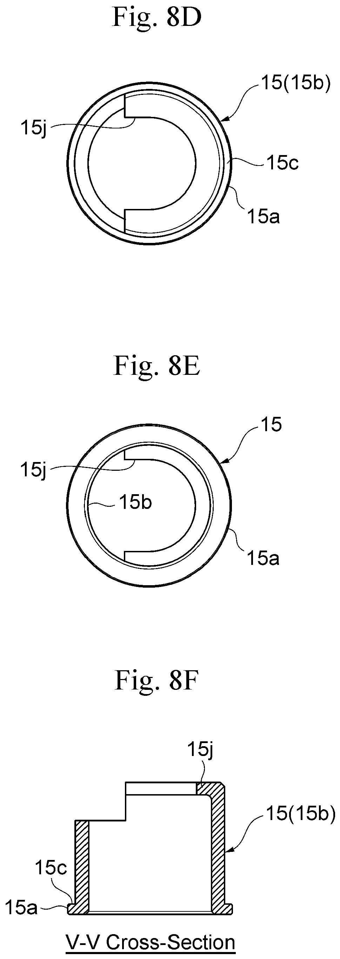

The upper end of the sub valve element 15 (or the tubular portion 15b thereof) is positioned above the stopper portion 24A (or the upper end thereof) by a predetermined dimension, and as clearly seen in Fig. 8A to Fig. 8F, the flanged latch portion 15j for moving the sub valve element 15 together with the plunger 37 is provided in an inwardly protruding manner at the upper-end opening (i.e., the upper end on the side opposite to the sub valve element portion 15a) of the sub valve element 15 (or the tubular portion 15b thereof). Herein, the flanged latch portion 15j is provided in a portion more than half the circumference of the upper-end opening. The flanged latch portion 15j protrudes from the upper-end opening of the tubular portion 15b toward the tubular leg portion 37a of the plunger 37 that is externally arranged around the intermediate fit-inserted portion 10c of the main valve element 10 so that when the plunger 37 is moved upward with respect to the sub valve element 15, the flanged latch portion 15j is latched to the outer flanged latch portion 37j of the plunger 37 (or the tubular leg portion 37a thereof).

In this embodiment, as described above, the Pc inlet/outlet chamber 26, the valve chamber 21, the in-valve-body communication passage 16A provided in the valve body 20, the Ps inlet/outlet chamber 28, and the like form the in-valve release passage 16 for releasing the pressure Pc in the crank chamber to the suction chamber of the compressor via the Ps inlet/outlet ports 27. The in-valve release passage 16 is adapted to be opened or closed as the sub valve element portion (or the lower end) 15a of the sub valve element 15 is moved into contact with or away from the sub valve seat portion 23 that is the upper end edge of the in-valve-body communication passage 16A.

When the main valve element 10, the sub valve element 15, and the plunger 37 are attached together, for example, the main valve element 10 is attached to the guide hole 19 of the valve body 20 (from the bottom side), and the sub valve element 15 is attached to the stopper portion 24A (from the top side). Then, the plunger 37 is moved horizontally with respect to the main valve element 10 and the sub valve element 15 so that the flanged latch portion 10k and the upper small-diameter portion 10d of the main valve element 10 are inserted into the cutout 37t and the slit 37s, respectively, of the plunger 37, the intermediate fit-inserted portion 10c of the main valve element 10 is disposed on the inner side of the tubular leg portion 37a with an approximately C-shape as seen in plan view from the open portion of the tubular leg portion 37a, and the tubular leg portion 37a is disposed at the upper end of the tubular portion 15b and on the inner side of the flanged latch portion 15j of the sub valve element 15 via an open portion (i.e., a portion where the flanged latch portion 15j is not provided) at the upper end of the sub valve element 15, and thereafter, the upper small-diameter portion 10d of the main valve element 10 may be fitted and inserted deep inside the slit 37s of the plunger 37 (i.e., on the central axis O of the plunger 37). Then, the plunger 37 may be rotated about the axis (i.e., the central axis) O approximately 180 degrees (with respect to the main valve element 10, the sub valve element 15, and the like) to a state where the outer flanged latch portion 37j of the plunger 37 may be engaged with the flanged latch portion 15j of the sub valve element 15 (i.e., the state illustrated in Fig. 1, etc.).

In the control valve 1 of this embodiment, when the plunger 37, the main valve element 10, and the sub valve element 15 are at the lowest position (when the bottom end face of the plunger 37 (i.e., the lower end face of the outer flanged latch portion 37j of the tubular leg portion 37a of the plunger 37) abuts the stopper portion 24A (or the upper face thereof), the main valve unit 11 is in the fully open position, and the sub valve unit 12 is in the fully closed position) as illustrated in Fig. 1, the clearance in the vertical direction between the main valve element portion 10a of the main valve element 10 and the valve orifice 22 (i.e., the valve seat portion) is represented by a first lift amount La, and the clearance between the outer flanged latch portion 37j of the plunger 37 and the flanged latch portion 15j of the sub valve element 15 is represented by a second lift amount Lb (> La), and the clearance between the inner flanged latch portion 37k of the plunger 37 and the flanged latch portion 10k of the main valve element 10 is represented by a predetermined amount Lx. The maximum lift amount (i.e., third lift amount) Lc (> Lb) of the plunger 37 (i.e., the lift amount of from the lowest position to the highest position of the plunger 37) corresponds to the first lift amount La + the predetermined amount Lx. That is, each of the clearances is set so as to satisfy the relationship of Lx > Lb - La.

In the control valve 1 of the present embodiment with the aforementioned configuration, when the valve orifice 22 is closed (i.e., the state illustrated in Fig. 2 to Fig. 4 in which the main valve element is in the closed position), foreign matter (such as scraps generated from cutting or polishing and an abrasive material that remain from the time of the machining and assembly process, particles resulting from sliding friction, and dust from the outside) may intrude into a sliding-surface gap (i.e., clearance) formed between the intermediate fit-inserted portion 10c (or the outer periphery thereof) of the main valve element 10 and the guide hole 19 (or the inner wall thereof) (more specifically, between a sliding-surface portion 10f formed by the lower portion of the intermediate fit-inserted portion 10c of the main valve element 10 (i.e., a main valve element side sliding-surface portion) and a sliding-surface portion 19f formed by the portion above the horizontal holes 25s of the guide hole 19 (i.e., a guide hole side sliding-surface portion)) due to a pressure difference between the Ps inlet/outlet ports 27 (and the Ps inlet/outlet chamber 28) and the Pd introduction ports 25. To avoid clogging of the sliding-surface gap (i.e., clearance) with foreign matter, which may result in operation failures of the main valve element 10 such that the main valve element 10 becomes difficult to move (e.g., the valve may become locked or the valve element may become left), the following measures are to be taken.

That is, as illustrated in the enlarged views of Fig. 5 and Fig. 6, the lower end of the sliding-surface portion 19f of the guide hole 19 (i.e., the end closer to the valve orifice 22) is provided with a (annular) widened portion 19h, which is wider than the sliding-surface portion 19f, with an annular step portion 19g interposed.

Meanwhile, when the valve orifice 22 is closed (i.e., the state illustrated in Fig. 2 to Fig. 4 and Fig. 6 in which the main valve element is in the closed position), the sliding-surface portion 10f of the main valve element 10 is positioned on (or goes into) the inner side of the sliding-surface portion 19f of the guide hole 19, whereas when the valve orifice 22 is open (i.e., the state illustrated in Fig. 1 and Fig. 5 in which the main valve element is in the open position), the lower end of the sliding-surface portion 10f of the main valve element 10 (that is, the step portion between the intermediate fit-inserted portion 10c (or the sliding-surface portion 10f thereof) and the lower small-diameter portion 10b) becomes separated from the sliding-surface portion 19f of the guide hole 19 to protrude to a position inside of the widened portion 19h or to a position below the widened portion 19h (i.e., a position closer to the valve orifice 22) (in the illustrated example, to the position inside of the widened portion 19h).

This allows the foreign matter intruded into the sliding-surface gap when the valve orifice 22 is closed to be easily released toward the widened portion 19h from the sliding-surface gap with the lower end of the sliding-surface portion 10f of the main valve element 10 that protrudes toward the widened portion 19h when the valve orifice 22 is open, thus avoiding accumulation of the foreign matter in the sliding-surface gap.

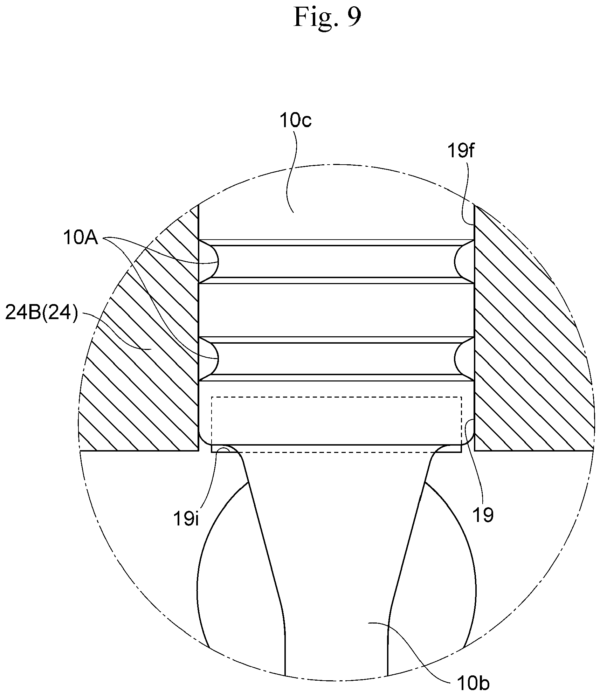

It should be noted that although the widened portion 19h is provided at the lower end of the sliding-surface portion 19f of the guide hole 19 (i.e., immediately above the horizontal holes 25s) in this example, it is needless to mention that the same operational advantages may be obtained if a recess groove 19i for forming a space that is wider than the sliding-surface portion 19f is provided near the lower end (or the inner wall thereof) of the sliding-surface portion 19f as illustrated in Fig. 9, for example.

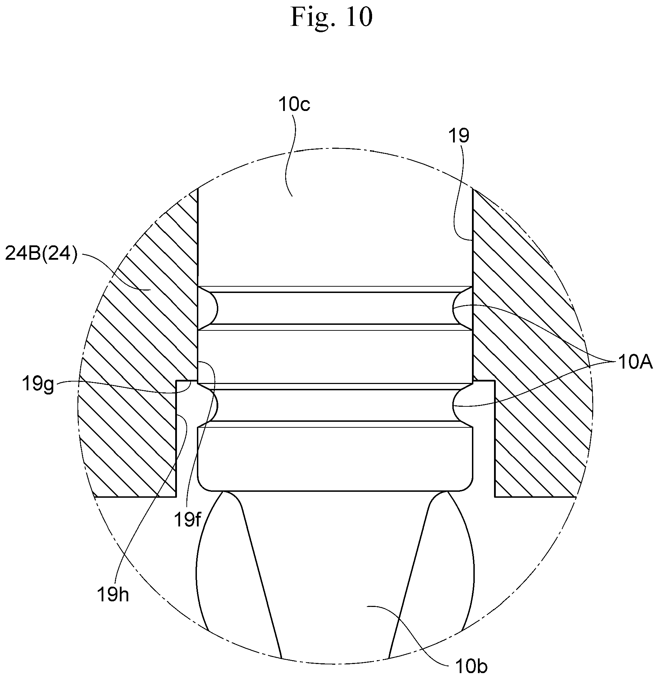

In addition, in this example, although the portion below the annular groove 10A formed on the outer periphery of the sliding-surface portion 10f of the main valve element 10 (or the intermediate fit-inserted portion 10c thereof) is adapted to protrude downward (toward the valve orifice 22) from the sliding-surface portion 19f of the guide hole 19, the portion including the annular groove 10A may be adapted to protrude downward (toward the valve orifice 22) from the sliding-surface portion 19f of the guide hole 19 as illustrated in Fig. 10, by adjusting the size or the like of the widened portion 19h, for example. In such a case, when the valve orifice 22 is open, the foreign matter that intrudes into and accumulates in the annular groove 10A may be surely discharged (to the Pc inlet/outlet chamber (inlet/outlet port) 26).

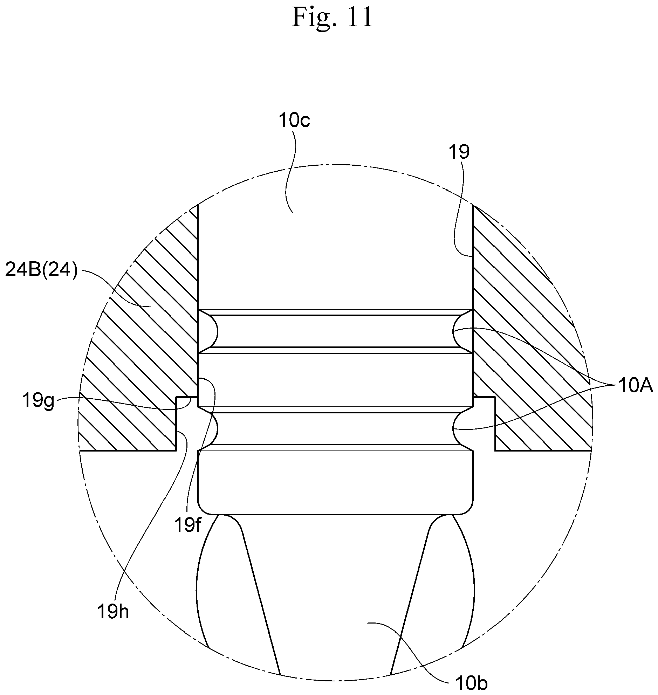

In addition, in this example, when the valve orifice 22 is open, the lower end (i.e., the step portion) of the sliding-surface portion 10f of the main valve element 10 does not protrude to the position corresponding to the Pd introduction ports 25 as seen in the direction perpendicular to the direction of the axis O (i.e., in the direction to open or close the valve orifice), thus avoiding interference of the flow of the refrigerant from the Pd introduction ports 25 and the horizontal holes 25s to the valve orifice 22. However, the lower end (i.e., the step portion) of the sliding-surface portion 10f of the main valve element 10 may be adapted to protrude to the position corresponding to the Pd introduction ports 25 as illustrated in Fig. 11, for example. In such a case, when the valve orifice 22 is open, the foreign matter released from the sliding-surface gap with the lower end of the sliding-surface portion 10f of the main valve element 10 may be surely discharged (to the Pc inlet/outlet chamber (inlet/outlet port) 26) while using the flow (i.e., fluid force) of the refrigerant from the Pd introduction ports 25 and the horizontal holes 25s to the valve orifice 22.

### [Operation of control valve 1]

Next, the operation of the control valve 1 with the aforementioned configuration will be briefly described.

During the normal control time (Pd → Pc control time), the lift amount of the plunger 37 is slightly greater than the first lift amount La at the maximum, and during the compressor actuation time (Pc → Ps control time), the lift amount of the plunger 37 is the third lift amount Lc.

That is, during the normal control time (Pd → Pc control time), when the solenoid portion 30A including the coil 32, the stator 33, the attractor 34, and the like is supplied with current and energized, the plunger 37 is attracted by the attractor 34, and along with the movement of the plunger 37, the main valve element 10 is moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the outer periphery of the plunger 37 and the guide pipe 35 and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the interior member 17, and the plunger 37, whereby the valve opening degree (i.e., clearance between the valve orifice 22 and the main valve element portion 10a) is regulated, and the pressure Pc in the crank chamber is controlled in accordance with the valve opening degree.

In this case, the main valve element 10 is always urged upward with the urging force of the valve-closing spring 50, and the flanged latch portion 15j of the sub valve element 15 is not latched to the outer flanged latch portion 37j of the plunger 37 (since Lb > La), and thus the sub valve element 15 is always urged downward with the urging force of the valve-closing spring 51. Therefore, the sub valve element portion 15a is in a state of being pressed against the sub valve seat portion 23 (i.e., the sub valve unit 12 is closed), and the in-valve release passage 16 is blocked within the valve body 20. Therefore, the pressure Pc in the crank chamber will not be released to the suction chamber via the in-valve release passage 16.

In contrast, during the compressor actuation time, the solenoid portion 30A is supplied with current and energized, and the plunger 37 is attracted by the attractor 34, and along with the upward movement of the plunger 37, the main valve element 10 is also moved upward and the valve orifice 22 is closed by the main valve element portion 10a of the main valve element 10. After that, the plunger 37 is further moved upward, whereby the sub valve element 15 is caused to open the in-valve release passage 16. Thus, the pressure Pc in the crank chamber is released into the suction chamber via the in-valve release passage 16.

Specifically, until the upward movement amount of the plunger 37 reaches the first lift amount La, the main valve element 10 moves in the direction to close the valve such that it follows the upward movement of the plunger 37 with the urging force of the valve-closing spring 50. Then, when the upward movement amount has reached the first lift amount La, the valve orifice 22 is closed by the main valve element portion 10a of the main valve element 10 (i.e., the state illustrated in Fig. 2). During the compressor actuation time, the plunger 37 is further moved upward with the main valve unit 11 in the closed-valve state (with the main valve element 10 remaining still in the closed-valve state). Until the upward movement amount of the plunger 37 reaches the second lift amount Lb, the sub valve element 15 remains still in the closed-valve state (with the sub valve element portion 15a still pressed against the sub valve seat portion 23) with the urging force of the valve-closing spring 51. When the upward movement amount has reached the second lift amount Lb, the outer flanged latch portion 37j of the plunger 37 is latched to the flanged latch portion 15j of the sub valve element 15 (i.e., the state illustrated in Fig. 3). In such a state, the plunger 37 is further moved upward until the inner flanged latch portion 37k of the plunger 37 is latched to the flanged latch portion 10k of the main valve element 10, that is, by the amount of Lx - (Lb - La) (i.e., the state illustrated in Fig. 4). That is, after the upward movement amount of the plunger 37 has reached the first lift amount La, the sub valve element 15 is elevated (from the valve body 20) by the amount of Lx - (Lb - La) until the inner flanged latch portion 37k of the plunger 37 is latched to the flanged latch portion 10k of the main valve element 10. In such a case, the main valve element 10 remains still in the closed-valve state, while the sub valve element portion 15a of the sub valve element 15 is lifted from the sub valve seat portion 23 by the amount of Lx - (Lb - La), whereby the in-valve release passage 16 is opened. When the inner flanged latch portion 37k of the plunger 37 is latched to the flanged latch portion 10k of the main valve element 10, neither the plunger 37 nor the sub valve element 15 is lifted any further even if the solenoid portion 30A generates attraction.

As described above, in the control valve 1 of the present embodiment, since the pressure Pc in the crank chamber is released to the suction chamber via the in-valve release passage 16 during the compressor actuation time, it is possible to significantly shorten the time required to increase the discharge capacity during the compressor actuation time. In addition, since the in-valve release passage 16 is closed by the sub valve element 15 during the normal control time (i.e., Pd→Pc control time), the operation efficiency of the compressor will not decrease.

In addition, in the control valve 1 of the present embodiment, when the valve orifice 22 is open, the lower end of the sliding-surface portion 10f of the main valve element 10 (or the intermediate fit-inserted portion 10c thereof) protrudes toward the valve orifice 22 from the sliding-surface portion 19f of the guide hole 19, whereby the foreign matter intruded into the sliding-surface gap (i.e., clearance) formed between the main valve element 10 and the guide hole 19 when the valve orifice 22 is closed can be easily discharged from the sliding-surface gap (i.e., clearance) via the widened portion 19h, through the valve orifice 22 and the valve chamber 21, to the Pc inlet/outlet chamber (inlet/outlet port) 26, by means of the main valve element 10 that protrudes from the sliding-surface portion 19f toward the valve orifice 22 when the valve orifice 22 is open, thus avoiding accumulation of the foreign matter in the sliding-surface gap. Therefore, it is possible to reduce operation failures such that the valve may become locked or the main valve element may become left.

In the aforementioned embodiment, although the valve body 20 has a two-component configuration including the body member 20A and the seat member 20B, and the in-valve-body communication passage 16A, which partially forms the in-valve release passage 16, is formed by the vertical groove 16b formed on the outer periphery of the seat member 20B of the valve body 20 and the annular recess portion 16a formed on the inner periphery of the body member 20A, it is needless to mention that the in-valve-body communication passage 16A may be provided on one of the seat member 20B side or the body member 20A side, for example, and the shape of the in-valve-body communication passage 16A is not limited to the aforementioned shape. Alternatively, for example, the valve body 20 may be formed as a unitary component (not the two components including the body member 20A and the seat member 20B), and an in-valve-body communication passage including a through-hole and the like may be formed in the valve body 20.

It is also needless to mention that the place and the shape of the portion where the sub valve element 15 for opening or closing the in-valve release passage 16 is disposed, a mechanism for coupling the sub valve element 15 and the plunger 37, and the like can be changed as appropriate.

### <Second embodiment>

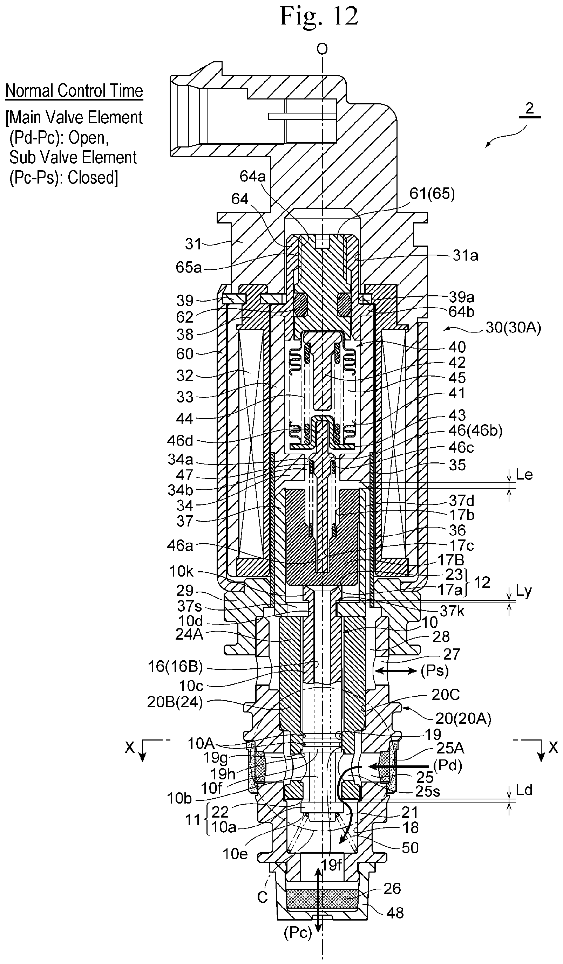

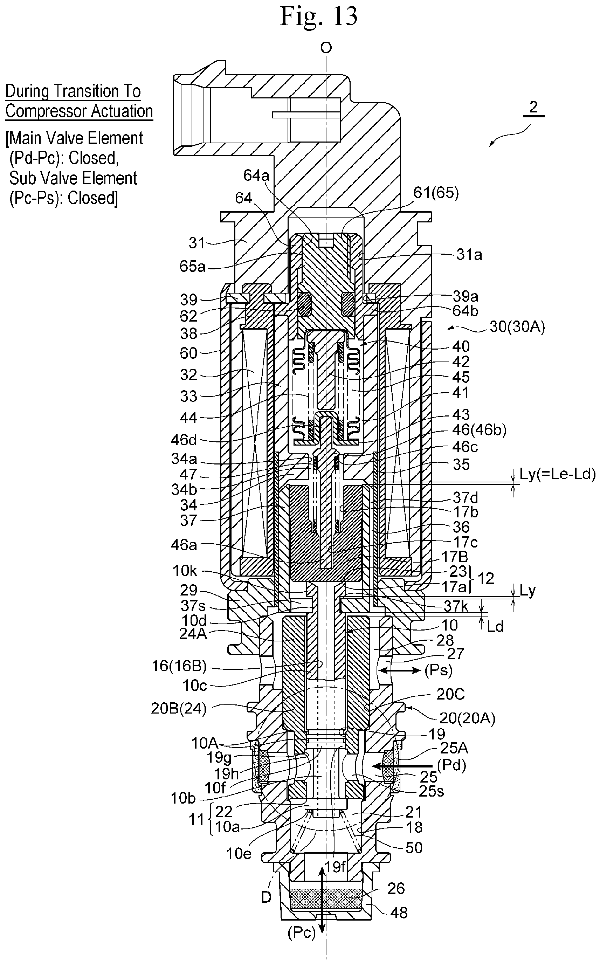

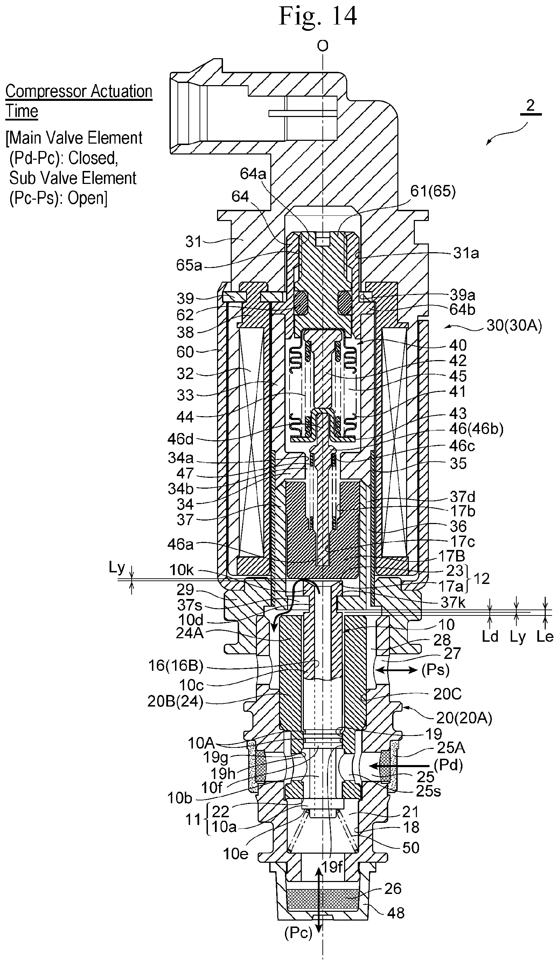

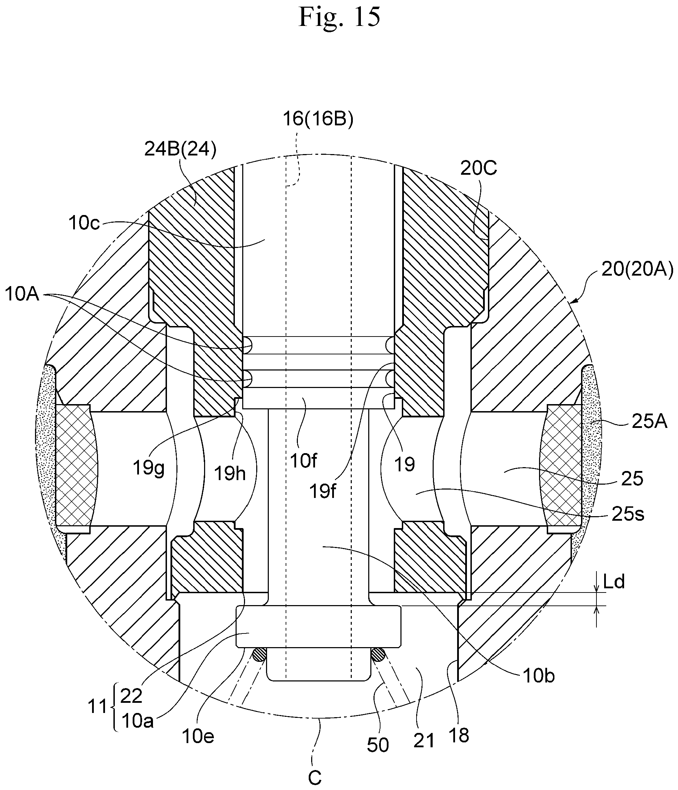

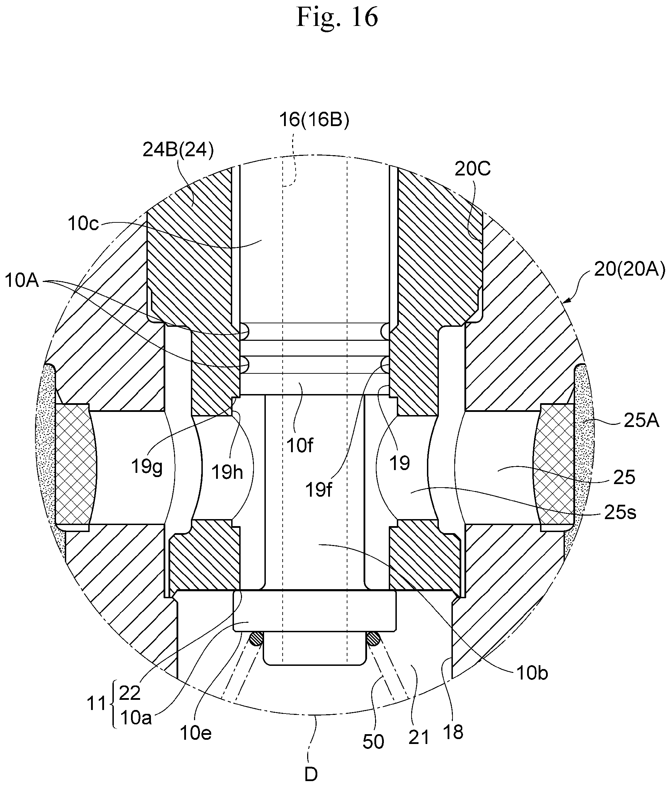

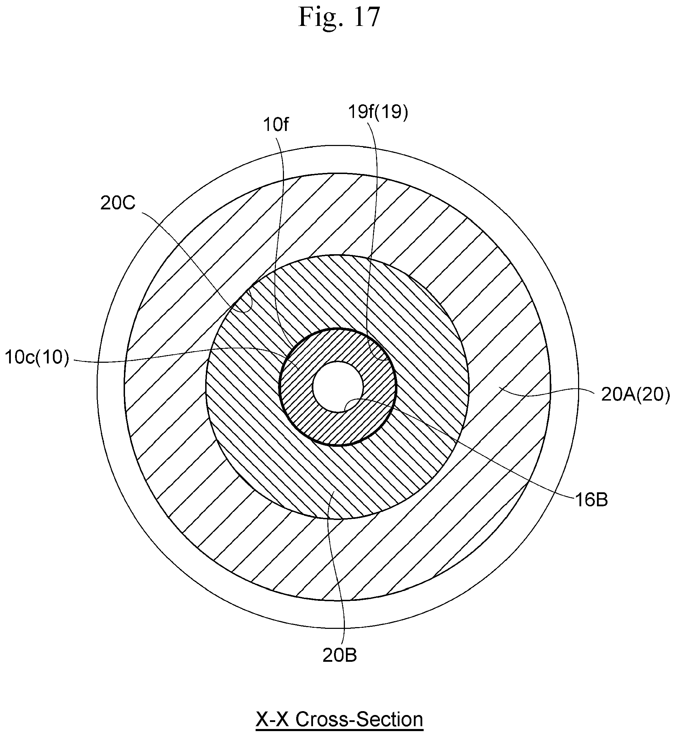

Fig. 12 to Fig. 14 are longitudinal sectional views of a second embodiment of the variable-capacity compressor control valve according to the present invention. Specifically, Fig. 12 illustrates a state in which the main valve element is in the open position and the sub valve element is in the closed position (i.e., during the normal control time), Fig. 13 illustrates a state in which the main valve element is in the closed position and the sub valve element is in the closed position (i.e., during the time of transition to compressor actuation), and Fig. 14 illustrates a state in which the main valve element is in the closed position and the sub valve element is in the open position (i.e., during the compressor actuation time). Fig. 15 is an enlarged view of a portion C of Fig. 12. Fig. 16 is an enlarged view of a portion D of Fig. 13. Fig. 17 is a cross-sectional view taken in the direction of the arrow X-X in Fig. 12.

A control valve 2 of the second embodiment differs from the control valve 1 of the aforementioned first embodiment mainly in that the in-valve release passage 16 for releasing the pressure Pc in the crank chamber to the suction chamber of the compressor via the Ps inlet/outlet ports 27 is provided in the main valve element 10 (not in the valve body 20), and the other configurations are substantially the same. Therefore, portions having the same configurations and operational advantages as those of the control valve 1 of the first embodiment are denoted by the same reference numerals, and the repeated description will be omitted. The following mainly discusses the differences.

### [Configuration of control valve 2]

In the control valve 2 of the embodiment illustrated in the drawings, the tubular leg portion 37a provided on the lower face of the plunger 37, the in-valve-body communication passage 16A in the valve body 20, the sub valve element 15 having the tubular portion 15b externally arranged around the seat member 20B (or the stopper portion 24A thereof) of the valve body 20, and the like that are provided in the control valve 1 of the aforementioned first embodiment are omitted. The interior member 17 securely inserted in the plunger 37 is formed as a sub valve element 17B, and the sub valve element 17B and the plunger 37 are configured to move together vertically in a state in which the sub valve element (or the interior member) 17B is urged downward by a plunger spring 47 provided in a compressed state between the sub valve element 17B and a step portion 46c formed on the large-diameter portion 46b of the pushrod 46. With the plunger spring 47 (or the compressive force thereof), the sub valve element 17B is urged in the direction to close the in-valve release passage 16 described below, and the bellows device 40 is held within the pressure-sensitive chamber 45 via the pushrod 46.

In this embodiment, the main valve element 10 disposed below the sub valve element 17B is produced from a non-magnetic material, for example, and a release through-hole 16B, which partially forms the in-valve release passage 16, is provided in the center of the inside of the main valve element 10 in a manner penetrating therethrough in the vertical direction (i.e., the direction of the axis O).

The sub valve element 17B is securely inserted in the plunger 37 above the main valve element 10 as described above. The outside diameter of the sub valve element 17B (= the inside diameter of the plunger 37) is set larger than the outside diameter of the flanged latch portion 10k of the main valve element 10, and the lower end (i.e., a planar face) of the sub valve element 17B serves as a sub valve element portion 17a that is adapted to move into contact with or away from a sub valve seat portion (i.e., an inverted truncated cone portion) 23, which is the upper end edge of the release through-hole 16B, and thus open or close the in-valve release passage 16.

As described above, in the second embodiment, the Pc inlet/outlet chamber 26, the valve chamber 21, the release through-hole 16B formed in the main valve element 10, the inside of the plunger 37, the Ps inlet/outlet chamber 28, and the like form the in-valve release passage 16 for releasing the pressure Pc in the crank chamber to the suction chamber of the compressor via the Ps inlet/outlet ports 27. The in-valve release passage 16 is adapted to be opened or closed as the sub valve element portion (or the lower end) 17a of the sub valve element 17B is moved into contact with or away from the sub valve seat portion 23 that is the upper end edge of the release through-hole 16B of the main valve element 10.

In the control valve 2 of this embodiment, when the plunger 37, the main valve element 10, and the sub valve element 17B are at the lowest position (when the bottom end face of the plunger 37 abuts the stopper portion 24A, the main valve unit 11 is in the fully open position, and the sub valve unit 12 is in the fully closed position) as illustrated in Fig. 12, the clearance in the vertical direction between the main valve element portion 10a of the main valve element 10 and the valve orifice 22 (i.e., the valve seat portion) is represented by a first lift amount Ld, and the clearance between the inner flanged latch portion 37k of the plunger 37 and the flanged latch portion 10k of the main valve element 10 is represented by a predetermined amount Ly. The maximum lift amount (i.e., second lift amount) Le of the plunger 37 (i.e., the lift amount of from the lowest position to the highest position of the plunger 37) corresponds to the first lift amount Ld + the predetermined amount Ly.

In addition, also in the control valve 2 of the second embodiment, as in the control valve 1 of the aforementioned first embodiment, to avoid clogging of the sliding-surface gap (i.e., clearance) formed between the intermediate fit-inserted portion 10c (or the outer periphery thereof) of the main valve element 10 and the guide hole 19 (or the inner wall thereof) with foreign matter (such as scraps generated from cutting or polishing and an abrasive material that remain from the time of the machining and assembly process, particles resulting from sliding friction, and dust from the outside), which may result in operation failures of the main valve element 10 such that the main valve element 10 becomes difficult to move (e.g., the valve may become locked or the valve element may become left), the lower end of the sliding-surface portion 19f of the guide hole 19 (i.e., the end closer to the valve orifice 22) is provided with a (annular) widened portion 19h, which is wider than the sliding-surface portion 19f, with an annular step portion 19g interposed, and when the valve orifice 22 is open, the lower end of the sliding-surface portion 10f of the main valve element 10 (that is, the step portion between the intermediate fit-inserted portion 10c (or the sliding-surface portion 10f thereof) and the lower small-diameter portion 10b) becomes separated from the sliding-surface portion 19f of the guide hole 19 to protrude to a position inside of the widened portion 19h or to a position below the widened portion 19h (i.e., a position closer to the valve orifice 22) (in the illustrated example, to the position inside of the widened portion 19h) (see, in particular, Fig. 15 and Fig. 16).

### [Operation of control valve 2]

Next, the operation of the control valve 2 with the aforementioned configuration will be briefly described.

During the normal control time (Pd → Pc control time), the lift amount of the plunger 37 (and the sub valve element 17B) is slightly greater than the first lift amount Ld at the maximum, and during the compressor actuation time (Pc → Ps control time), the lift amount of the plunger 37 (and the sub valve element 17B) is the second lift amount Le.

That is, during the normal control time (Pd → Pc control time), when the solenoid portion 30A including the coil 32, the stator 33, the attractor 34, and the like is supplied with current and energized, the plunger 37 and the sub valve element 17B are together attracted (upward) by the attractor 34, and along with the movement of the plunger 37 and the sub valve element 17B, the main valve element 10 is also moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the outer periphery of the plunger 37 and the guide pipe 35 and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the sub valve element 17B, and the like, whereby the valve opening degree (i.e., clearance between the valve orifice 22 and the main valve element portion 10a) is regulated, and the pressure Pc in the crank chamber is controlled in accordance with the valve opening degree.

In this case, the main valve element 10 is always urged upward with the urging force of the valve-closing spring 50, while the sub valve element 17B is always urged downward with the urging force of the valve-opening spring 47. Thus, the sub valve element portion 17a is in a state of being pressed against the sub valve seat portion 23 (i.e., the sub valve unit 12 is closed), and the in-valve release passage 16 is blocked within the main valve element 10. Therefore, the pressure Pc in the crank chamber will not be released to the suction chamber via the in-valve release passage 16.

In contrast, during the compressor actuation time, the solenoid portion 30A is supplied with current and energized, and the plunger 37 and the sub valve element 17B are together attracted (upward) by the attractor 34, and along with the upward movement of the plunger 37 and the sub valve element 17B, the main valve element 10 is also moved upward and the valve orifice 22 is closed by the main valve element portion 10a of the main valve element 10. After that, the plunger 37 and the sub valve element 17B are further moved upward, whereby the sub valve element 17B is caused to open the in-valve release passage 16. Thus, the pressure Pc in the crank chamber is released into the suction chamber via the in-valve release passage 16.

Specifically, until the upward movement amount of the plunger 37 (and the sub valve element 17B) reaches the first lift amount Ld, the main valve element 10 moves in the direction to close the valve such that it follows the upward movement of the plunger 37 and the sub valve element 17B with the urging force of the valve-closing spring 50. Then, when the upward movement amount has reached the first lift amount Ld, the valve orifice 22 is closed by the main valve element portion 10a of the main valve element 10 (i.e., the state illustrated in Fig. 13), and the plunger 37 and the sub valve element 17B are further moved upward by the predetermined amount Ly with the main valve unit 11 in the closed-valve state (the state illustrated in Fig. 14). That is, after the upward movement amount of the plunger 37 and the sub valve element 17B has reached the first lift amount Ld, the sub valve element 17B is attracted together with the plunger 37 toward the attractor 34 by the predetermined amount Ly until the inner flanged latch portion 37k of the plunger 37 is latched to the flanged latch portion 10k of the main valve element 10 (the first lift amount Ld + the predetermined amount Ly = the second lift amount Le). In such a case, the main valve element 10 remains still in the closed-valve state. Thus, the sub valve element portion 17a of the sub valve element 17B is lifted from the sub valve seat portion 23 by the predetermined amount Ly, whereby the in-valve release passage 16 is opened. When the inner flanged latch portion 37k of the plunger 37 is latched to the flanged latch portion 10k of the main valve element 10, neither the plunger 37 nor the sub valve element 17B is lifted any further even if the solenoid portion 30A generates attraction.

It is needless to mention that the control valve 2 of the present embodiment with the aforementioned configuration can obtain the same operational advantages as those of the control valve 1 of the aforementioned first embodiment. For specific structures of the control valve 2 of the second embodiment, see JP 2018-003884 A of the same inventors, if necessary.

### Reference Signs List

- 1: Variable-capacity compressor control valve (first embodiment)
- 2: Variable-capacity compressor control valve (second embodiment)
- 10: Main valve element
- 10a: Main valve element portion
- 10b: Lower small-diameter portion
- 10c: Intermediate fit-inserted portion
- 10d: Upper small-diameter portion
- 10f: Sliding-surface portion (main valve element side sliding-surface portion)
- 10k: Flanged latch portion
- 10A: Annular groove
- 11: Main valve unit
- 12: Sub valve unit
- 15: Sub valve element
- 15a: Sub valve element portion
- 15b: Tubular portion
- 15j: Flanged latch portion
- 16: In-valve release passage
- 16a: Annular recess portion
- 16b: Vertical groove
- 16A: In-valve-body communication passage
- 16B: Release through-hole (second embodiment)
- 17: Interior member
- 17B: Sub valve element (second embodiment)
- 18: Housing hole
- 19: Guide hole
- 19f: Sliding-surface portion (guide hole side sliding-surface portion)
- 19g: Annular step portion
- 19h: Widened portion
- 20: Valve body
- 20A: Body member
- 20B: Seat member
- 20C: Recess hole
- 21: Valve chamber
- 22: Valve orifice
- 23: Sub valve seat portion
- 24: Fit-insertion portion
- 24A: Stopper portion
- 25: Pd introduction port
- 25s: Horizontal hole
- 26: Pc inlet/outlet chamber (inlet/outlet port)
- 27: Ps inlet/outlet port
- 28: Ps inlet/outlet chamber
- 30: Electromagnetic actuator
- 30A: Solenoid portion
- 32: Coil
- 33: Stator
- 34: Attractor
- 37: Plunger
- 37a: Tubular leg portion
- 37j: Outer flanged latch portion
- 37k: Inner flanged latch portion
- 37s: Slit
- 37t: Cutout
- 40: Bellows device (pressure-sensitive reaction member)
- 45: Pressure-sensitive chamber
- 46: Pushrod
- 50: Valve-closing spring
- 51: Valve-closing spring

## Claims

1. A variable-capacity compressor control valve comprising:
a main valve element including a main valve element portion;
a valve body including a guide hole through which the main valve element is slidably fitted and inserted, a valve chamber with a valve orifice, the valve orifice being formed at an end of the guide hole and being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor;
an electromagnetic actuator adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein the main valve element includes a main valve element side sliding-surface portion adapted to go into an inner side of a guide hole side sliding-surface portion of the guide hole when the valve orifice is closed, and the main valve element side sliding-surface portion of the main valve element is adapted to partially protrude toward the valve orifice from the guide hole side sliding-surface portion of the guide hole when the valve orifice is open.

2. The variable-capacity compressor control valve according to claim 1,
wherein:
the guide hole side sliding-surface portion has a widened portion provided at an end closer to the valve orifice, the widened portion being wider than the guide hole side sliding-surface portion; and
the main valve element side sliding-surface portion of the main valve element is adapted to partially protrude to a position inside of the widened portion or to a position closer to the valve orifice with respect to the widened portion when the valve orifice is open.

3. The variable-capacity compressor control valve according to claim 1,
wherein:
the guide hole side sliding-surface portion has a recess groove provided at an end closer to the valve orifice; and
the main valve element side sliding-surface portion of the main valve element is adapted to partially protrude to a position inside of the recess groove or to a position closer to the valve orifice with respect to the recess groove when the valve orifice is open.

4. The variable-capacity compressor control valve according to any one of claims 1 to 3,
wherein:
an annular groove is provided on an outer periphery of the main valve element; and
a portion including at least the annular groove of the main valve element is adapted to protrude from the guide hole side sliding-surface portion of the guide hole toward the valve orifice when the valve orifice is open.

5. The variable-capacity compressor control valve according to any one of claims 1 to 4, wherein a lower small-diameter portion is provided immediately below the main valve element side sliding-surface portion of the main valve element, with a step portion interposed therebetween.

6. The variable-capacity compressor control valve according to any one of claims 1 to 5, wherein when the valve orifice is open, the main valve element side sliding-surface portion of the main valve element is not adapted to partially protrude to a position corresponding to the Pd introduction port communicating with the guide hole between the guide hole side sliding-surface portion and the valve orifice, as seen in a direction perpendicular to a direction to open or close the valve orifice.

7. The variable-capacity compressor control valve according to any one of claims 1 to 5, wherein when the valve orifice is open, the main valve element side sliding-surface portion of the main valve element is adapted to partially protrude to a position corresponding to the Pd introduction port communicating with the guide hole between the guide hole side sliding-surface portion and the valve orifice, as seen in a direction perpendicular to a direction to open or close the valve orifice.

8. The variable-capacity compressor control valve according to any one of claims 1 to 7, wherein the guide hole side sliding-surface portion of the guide hole is provided between the Ps inlet/outlet port and one of the Pd introduction port or the Pc inlet/outlet port within the valve body.

9. The variable-capacity compressor control valve according to any one of claims 1 to 8, further comprising:
an in-valve release passage provided in the valve body or the main valve element, the in-valve release passage being adapted to release a pressure Pc in the crank chamber to the suction chamber of the compressor via the Ps inlet/outlet port; and
a sub valve element adapted to open or close the in-valve release passage.
